(19) Europäisches Patentamt
European Patent Office
Office européen des brevets

(11) **EP 4 354 946 A1**

(12) **EUROPEAN PATENT APPLICATION**
published in accordance with Art. 153(4) EPC

(43) Date of publication:
**17.04.2024 Bulletin 2024/16**

(21) Application number: **22811023.5**

(22) Date of filing: **30.03.2022**

(51) International Patent Classification (IPC):
**H04W 24/10** (2009.01)  **H04W 72/02** (2009.01)
**H04W 72/04** (2009.01)  **H04W 28/18** (2009.01)

(52) Cooperative Patent Classification (CPC):
**H04W 24/10; H04W 28/18; H04W 72/02;
H04W 72/04**

(86) International application number:
**PCT/JP2022/015839**

(87) International publication number:
**WO 2022/249749 (01.12.2022 Gazette 2022/48)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **26.05.2021 JP 2021088423**

(71) Applicant: **NTT DOCOMO, INC.
Tokyo 100-6150 (JP)**

(72) Inventors:
• **TAKAHASHI Yuki
Tokyo 100-6150 (JP)**
• **NAGATA Satoshi
Tokyo 100-6150 (JP)**

(74) Representative: **Hoffmann Eitle
Patent- und Rechtsanwälte PartmbB
Arabellastraße 30
81925 München (DE)**

(54) **TERMINAL, WIRELESS COMMUNICATION SYSTEM, AND WIRELESS COMMUNICATION METHOD**

(57)  A terminal comprising: a transmission unit that transmits a feedback to be used in selecting a modulation method used on a downlink channel; and a control unit that determines a content of the feedback; wherein the transmission unit transmits the feedback using a resource of uplink control information different from the feedback.

FIG.4

EP 4 354 946 A1

**Description**

[Technical Field]

The present disclosure relates to a terminal, a base station and a radio communication method for performing radio communication, in particular, a terminal, a radio communication system and a radio communication method for transmitting feedback to be used in selecting a modulation method.

[Background Art]

The 3rd Generation Partnership Project (3GPP) has specified the 5th generation mobile communication system (Also called 5G, New Radio (NR), or Next Generation (NG)) and is also in the process of specifying the next generation called Beyond 5G, 5G Evolution or 6G.

Release 17 of 3GPP specifies a modulation scheme for downlink channels (For example, PDSCH; Physical Downlink Shared Channel) (MCS; Modulation and Coding Scheme) that can be used to improve the accuracy of the (Below, UE; User Equipment) selection of the MCS scheme (For example, Non-Patent Literature 1). Specifically, as feedback, support for delta-CQI (Channel Quality Indicator)/MCS was agreed.

[Citation List]

[Non-Patent Literature]

[Non-Patent Literature 1]
"Enhanced Industrial Internet of Things (IoT) and ultra-reliable and low latency communication," RP-201310, 3GPP TSG RAN Meeting #86e, 3GPP, July 2020

[Summary of Invention]

[Issues to be solved by the invention]

Against this background, the inventors, etc. found, as a result of careful examination, the necessity of appropriately transmitting the above-mentioned feedback (delta-CQI/MCS).

Accordingly, the present invention has been made in view of such a situation, and it is an object of the present invention to provide a terminal, a radio communication system, and a radio communication method capable of appropriately transmitting feedback to be used in the selection of an MCS.

[Means for Solving the Problem]

An aspect of the disclosure is a terminal comprising: a transmission unit that transmits a feedback to be used in selecting a modulation method used on a downlink channel; and a control unit that determines a content of the feedback; wherein the transmission unit transmits the feedback using a resource of uplink control information different from the feedback.

An aspect of the disclosure is a radio communication system comprising: a terminal; and a base station; wherein the terminal comprises: a transmission unit that transmits a feedback to be used in selecting a modulation method used on a downlink channel; and a control unit that determines a content of the feedback; wherein the transmission unit transmits the feedback using a resource of uplink control information different from the feedback.

An aspect of the disclosure is a radio communication method comprising: a step A of transmitting a feedback to be used in selecting a modulation method used on a downlink channel; and a step B of determining a content of the feedback; wherein the step A includes a step of transmitting the feedback using a resource of uplink control information different from the feedback.

[Brief Description of Drawings]

[FIG. 1] FIG. 1 is a general schematic diagram of the radio communication system 10.
[FIG. 2] FIG. 2 is a diagram showing the frequency range used in the radio communication system 10.
[FIG. 3] FIG. 3 is a diagram showing a configuration example of a radio frame, a sub-frame and a slot used in the radio communication system 10.

[FIG. 4] FIG. 4 is a functional block configuration diagram of the UE200.

[FIG. 5] FIG. 5 is a functional block configuration diagram of the gNB100.

[FIG. 6] FIG. 6 is a diagram for explaining a table.

[FIG. 7] FIG. 7 is a diagram for explaining a table.

[FIG. 8] FIG. 8 is a diagram for explaining an operation example.

[FIG. 9] FIG. 9 is a diagram showing an example of a hardware configuration of the gNB100 and the UE200.

[Modes for Carrying out the Invention]

Exemplary embodiments of the present invention are explained below with reference to the accompanying drawings. The same functions and structures are denoted by the same or similar reference numerals, and their descriptions are omitted accordingly.

[Embodiments]

(1) Overall schematic configuration of a radio communication system

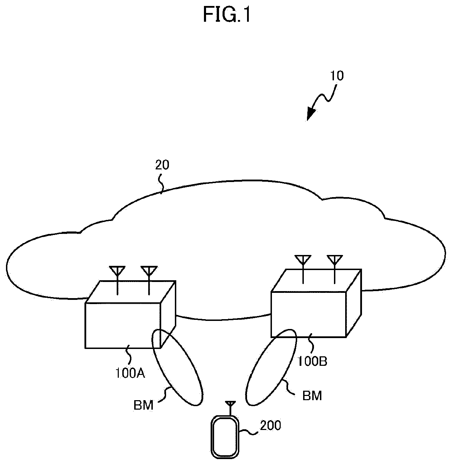

FIG. 1 is an overall schematic configuration diagram of a radio communication system 10 according to an embodiment, the radio communication system 10 is a radio communication system according to 5G New Radio (NR) and includes a Next Generation-Radio Access Network 20 (hereinafter referred to as NG-RAN20 and a terminal 200 (UE (User Equipment) 200).

The radio communication system 10 may be a radio communication system according to a system called Beyond 5G, 5G Evolution or 6G.

The NG-RAN20 includes a radio base station 100 A (gNB100A) and a radio base station 100B (gNB100B0B). The specific configuration of the radio communication system 10 including the number of gNBs and UEs is not limited to the example shown in FIG. 1.

The NG-RAN20 actually includes a plurality of NG-RAN Nodes, specifically gNBs (or ng-eNBs), connected to a core network (5GC, not shown) according toto 5G. Note that the NG-RAN20 and 5GC may be referred to simply as "networks ".

The gNB100A and gNB100B are radio base stations in accordance with 5G, and perform radio communications in accordance with the UE200 a and 5G. The gNB100A, gNB100B, and UE200 can support Massive MIMO (Multiple-Input Multiple-Output), which generates a more directional beam BM by controlling radio signals transmitted from multiple antenna elements; Carrier Aggregation (CA), which uses multiple component carriers (CCs) bundled together; and Dual Connectivity (DC), which communicates with two or more transport blocks simultaneously between the UE and each of two NG-RAN Nodes.

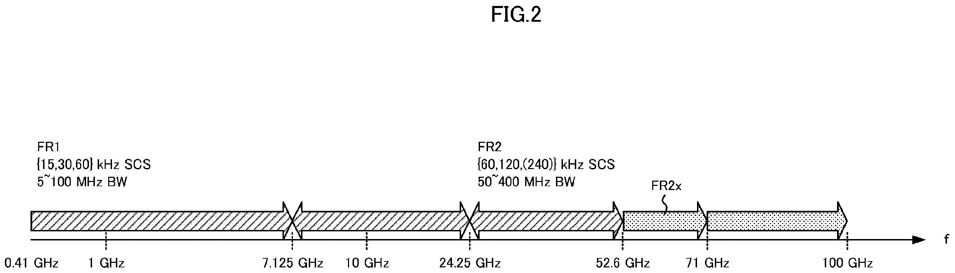

The radio communication system 10 also supports multiple frequency ranges (FRs). FIG. 2 shows the frequency ranges used in radio communication system 10.

As shown in FIG. 2, the radio communication system 10 corresponds to FR1 FRand FR2. The frequency bands of each FR are as follows.

- FR 1:410 MHz ~7.125 GHz
- FR2:24.25 GHz~52.6 GHz

FR1 uses 15, 30 or 60 kHz sub-carrier spacing (SCS) and may use a 5~100 MHz bandwidth (BW). FR2 is higher frequency than FR1 and may use 60 or 120 kHz (may include 240 kHz) SCS and may use a 50~400 MHz bandwidth (BW).

SCS may be interpreted teas numerology. Numerology is defined in 3GPP TS38.300 and corresponds to one subcarrier interval in the frequency domain.

In addition, the radio communication system 10 corresponds to a higher frequency band than the frequency band of FR2. Specifically, the radio communication system 10 corresponds to a frequency band exceeding 52.6 GHz and up to 71 GHz or 114.25 GHz. Such a high frequency band may be referred to as "FR 2 x" for convenience.

In order to solve the problem that the influence of phase noise increases in the high frequency band, a cyclic prefix-orthogonal frequency division multiplexing (CP-OFDM)/discrete Fourier transform-spread (DFT-S-OFDM) with a larger sub-carrier spacing (SCS) may be applied when a band exceeding 52H.6 GHz is used.

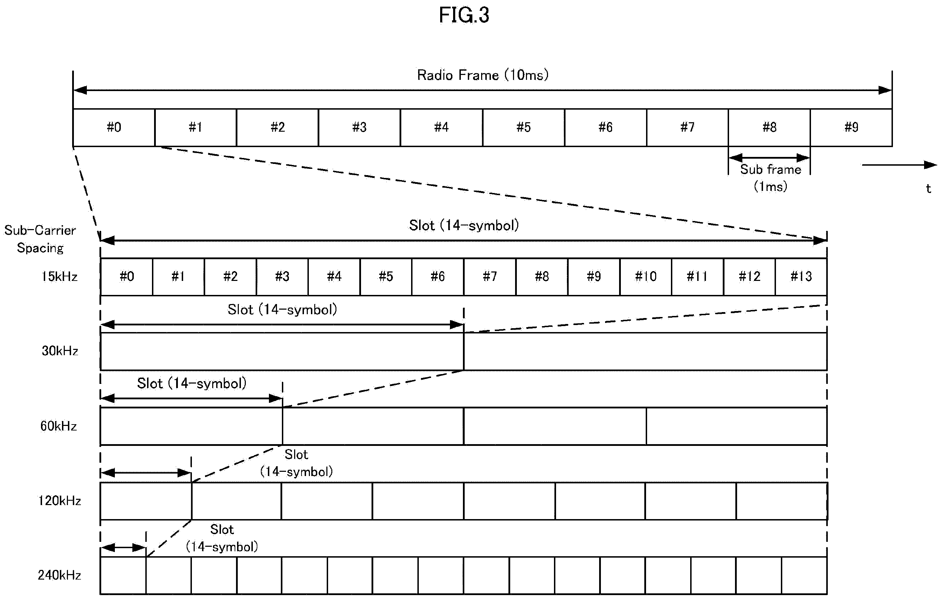

FIG. 3 shows a configuration example of a radio frame, a sub-frame and a slot used in the radio communication system 10.

As shown in FIG. 3, a slot consists of 14 symbols, and the larger (wider) the SCS, the shorter the symbol per period (and slot period). The SCS is not limited to the interval (frequency) shown in FIG. 3. For example, 480 kHz, 960 kHz, and the like may be used.

The number of symbols constituting 1 slot may not necessarily be 14 symbols (For example, 28, 56 symbols). Furthermore, the number of slots per subframe may vary depending on the SCS.

Note that the time direction (t) shown in FIG. 3 may be referred to as a time domain, symbol period, symbol time, etc. The frequency direction may be referred to as a frequency domain, resource block, subcarrier, bandwidth part (BWP), etc.

A DMRS is a type of reference signal and is prepared for various channels. In this context, unless otherwise specified, a DMRS for a downlink data channel, specifically a PDSCH (Physical Downlink Shared Channel), may be used. However, a DMRS for an uplink data channel, specifically a PUSCH (Physical Uplink Shared Channel), may be interpreted in the same way as a DMRS for a PDSCH.

The DMRS may be used for channel estimation in a device, e.g., UE200, as pas rt of a coherent demodulation. The DMRS may be present only in the resource block (RB) used for PDSCH transmission.

The DMRS may have more than one mapping type. Specifically, the DMRS may have a mapping type A and a mapping type B. In a mapping type A, the first DMRS is located in the second or third symbol of the slot. In a mapping type A, the DMRS may be mapped relative to the slot boundary regardless of where the actual data transmission is initiated in the slot. The reason why the first DMRS is placed in the second or third symbol of the slot may be interpreted as placing the first DMRS after the control resource sets (CORESET).

In mapping type B, the first DMRS may be placed in the first symbol of the data allocation. That is, the location of the DMRS may be given relative to where the data is located, rather thana relative to the slot boundary.

The DMRS may also have more than one type. Specifically, the DMRS may have Type 1 and Type 2. Type 1 and Type 2 differ in the maximum number of mapping and orthogonal reference signals in the frequency domain. Type 1 can output up to four orthogonal signals in single-symbol DMRS, and Type 2 can output up to eight orthogonal signals in double-symbol DMRS.

(2) Radio communication system functional block configuration Next, a functional block configuration of the radio communication system 10 will be described.

First, a functional block configuration of the UE200 will be described.

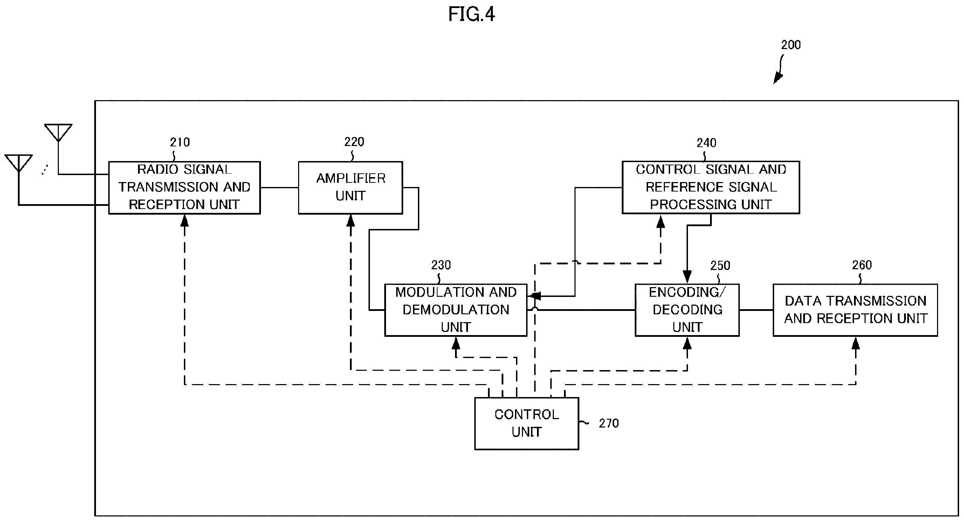

FIG. 4 is a functional block configuration diagram of the UE200. As shown in FIG. 4, the UE200 includes a radio signal transmission and reception unit 210, an amplifier unit 220, a modulation and demodulation unit 230, a control signal and reference signal processing unit 240, an encoding/decoding unit 250, a data transmission and reception unit 260, and a control unit 270.

The radio signal transmission and reception unit 210 transmits and receives radio signals in accordance with the NR. the radio signal transmission and reception unit 210 corresponds to a Massive MIMO, a CA using a plurality of CCs bundled together, and a DC that simultaneously communicates between a UE and each of two NG-RAN Nodes.

The amplifier unit 220 is composed of a PA (Power Amplifier)/LNA (Low Noise Amplifier) or the like. the amplifier unit 220 amplifies the signal output from the modulation and demodulation unit 230 to a predetermined power level. the amplifier unit 220 amplifies the RF signal output from radio signal transmission and reception unit 210.

The modulation and demodulation unit 230 performs data modulation/demodulation, transmission power setting, resource block allocation, etc. for each predetermined communication destination (gNB100 or other gNB). In the modulation and demodulation unit 230, Cyclic Prefix-Orthogonal Frequency Division Multiplexing (CP-OFDM)/Discrete Fourier Transform-Spread (DFT-S-OFDM) may be applied. DFT-S-OFDM may be used not only for the uplink (UL) but also for the downlink (DL).

The control signal and reference signal processing unit 240 performs processing related to various control signals transmitted and received by the UE200 and various reference signals transmitted and received by the UE200.

Specifically, the control signal and reference signal processing unit 240 receives various control signals transmitted from the gNB100 via a predetermined control channel, for example a radio resource control layer (RRC) control signal. the control signal and reference signal processing unit 240 also transmits various control signals to the gNB100 via a predetermined control channel.

The control signal and reference signal processing unit 240 executes processing using a reference signal (RS) such as a demodulation reference signals (DMRS) and a phase tracking reference signal (PTRS).

The DMRS is a known reference signal (pilot signal) between a base station and a terminal of each terminal for estimating a fading channel used for data demodulation. The PTRS is a reference signal of each terminal for estimating phase noise, which is a problem in a high frequency band.

In addition to the DMRS and the PTRS, the reference signal may include a Channel State Information-Reference Signal (CSI-RS), a Sounding Reference Signal (SRS), and a Positioning Reference Signal (PRS) for position information.

The channel may include a control channel and a data channel. The control channel may include PDCCH (Physical Downlink Control Channel), PUCCH (Physical Uplink Control Channel), RACH (Random Access Channel), Downlink Control Information (DCI) including Random Access Radio Network Temporary Identifier (RA-RNTI), and Physical Broadcast Channel (PBCH).

The data channel may also include PDSCH (Physical Downlink Shared Channel) and PUSCH (Physical Uplink Shared Channel). Data means data transmitted over a data channel. A data channel may be read as a shared channel.

Here, the control signal and reference signal processing unit 240 may receive downlink control information (DCI). The DCI includes existing fields for storing DCI Formats, Carrier indicator (CI), BWP indicator, Frequency Domain Resource Assignment (FDRA), Time Domain Resource Assignment (TDRA), Modulation and Coding Scheme (MCS), HPN (HARQ Process Number), New Data Indicator (NDI), Redundancy Version (RV), and the like.

The value stored in the DCI Format field is an information element that specifies the format of the DCI. The value stored in the CI field is an information element that specifies the CC to which the DCI applies. The value stored in the BWP indicator field is an information element that specifies the BWP to which the DCI applies. The BWP that can be specified by the BWP indicator is set by an information element (Bandwidth Part-Config) contained in the RRC message. The value stored in the FDRA field is an information element that specifies the frequency domain resource to which the DCI applies. The frequency domain resource is specified by the value stored in the FDRA field and the information element (RA Type) contained in the RRC message. The value stored in the TDRA field is the information element that specifies the time domain resource to which the DCI is applied. The time domain resource is specified by the value stored in the TDRA field and the information element (pdsch-TimeDomainAllocationList, pusch-TimeDomain-AllocationList) contained in the RRC message. The time domain resource may be specified by the value stored in the TDRA field and the default table. The value stored in the MCS field is an information element that specifies the MCS to which the DCI applies. The MCS is specified by the value stored in the MCS and the MCS table. The MCS table may be specified by an RRC message or specified by RNTI scrambling. The value stored in the HPN field is an information element that specifies the HARQ Process to which the DCI is applied. The value stored in the NDI is an information element that identifies whether the data to which the DCI is applied is first-time data. The value stored in the RV field is an information element that specifies the redundancy of the data to which the DCI applies.

The encoding/decoding unit 250 performs data partitioning/concatenation and channel coding/decoding for each predetermined communication destination (gNB100 or other gNB).

Specifically, the encoding/decoding unit 250 divides the data output from the data transmission and reception unit 260 into predetermined sizes and performs channel coding for the divided data. the encoding/decoding unit 250 decodes the data output from the modulation and demodulation unit 230 and concatenates the decoded data.

The data transmission and reception unit 260 transmits and receives the protocol data unit (PDU) and the service data unit (SDU). Specifically, the data transmission and reception unit 260 performs assembly/disassembly of the PDU/SDU in a plurality of layers (Media access control layer (MAC), radio link control layer (RLC), packet data convergence protocol layer (PDCP), etc.). the data transmission and reception unit 260 also performs error correction and retransmission control of data based on HARQ (Hybrid Automatic Repeat Request).

The control unit 270 controls each functional block constituting the UE200. In the embodiment, the control unit 270 constitutes control unit that determines the content of feedback to be used in selecting the modulation method (MCS) to be used in the downlink channel (For example, PDSCH). The feedback may be referred to as delta-MCS.

The content of the feedback includes at least one of an information element that explicitly indicates the desired MCS, an information element that explicitly indicates the difference between the current MCS and the desired MCS, and an information element that indicates an index that is explicitly associated with the difference between the current MCS and the desired MCS.

Note that the control unit 270 controls the control signal and reference signal processing unit 240 described above, and the control signal and reference signal processing unit 240 constitutes transmission unit that transmits feedback to be used in selecting the MCS to be used in the PDSCH. In the embodiment, the control signal and reference signal processing unit 240 transmits the feedback using the resource of the uplink control information different from the feedback.

Second, the functional block configuration of the gNB100 will be described.

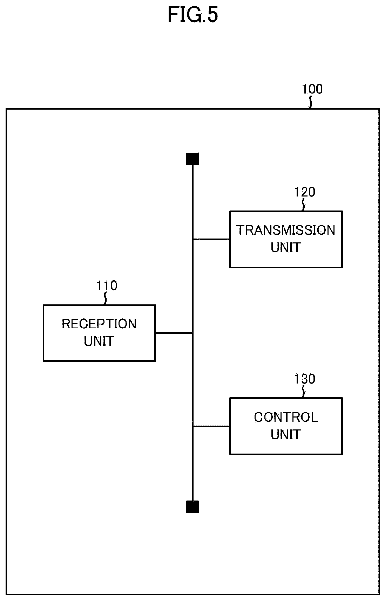

FIG. 5 is a functional block diagram of the gNB100. As shown in FIG. 5, the gNB100 has a reception unit 110, a transmission unit 120, and a control unit 130.

The reception unit 110 receives various signals from the UE200. The reception unit 110 may receive UL signals via PUCCH or PUSCH. reception unit 110 may receive feedback to be used in selecting the MCS to be used in the PDSCH.

The transmission unit 120 transmits various signals to the UE200. The transmission unit 120 may transmit DL signals via PDCCH or PDSCH.

The control unit 130 controls the gNB100. The control unit 130 may select an MCS to be applied to the PDSCH based on feedback.

(3) Contents of feedback

The contents of the feedback described above will be described below. The following options can be considered as the contents of the feedback.

(3.1) Example 1

In Example 1, the content of the feedback may include an information element (MCS Index) indicating the desired MCS. The MCS Index defined in the MCS Index table defined in 3GPP TS38.214 may be used as the MCS Index.

Specifically, when the UE200 fails to decode the PDSCH transmitted by the MCS Index, it may include in the feedback a MCS Index lower than the MCS Index used in the PDSCH that failed to decode as the desired MCS Index. For example, when the UE200 fails to decode the PDSCH transmitted by the MCS Index #5, it may send feedback containing the MCS Index #0 to the NG-RAN20 (gNB100).

In this configuration, a large bit size is required as the bit size of the feedback (UCI), but the content of the feedback (delta-MCS selection) is highly flexible. That is, the signaling load is relatively large, but the flexibility of the MCS that can be requested is high.

(3.2) Example 2

In Example 2, the content of the feedback may include an information element indicating a difference between the current MCS and the desired MCS. The difference between the current MCS and the desired MCS may be the difference in the MCS Index defined in the MCS Index table defined in 3GPP TS38.214.

Specifically, when the UE200 fails to decode the PDSCH transmitted by the MCS Index, the feedback may include the difference between the MCS Index used by the PDSCH that failed to decode and the desired MCS Index. The desired MCS Index may be lower than the current MCS Index. For example, the UE200 may send feedback containing "-3" to the NG-RAN20 (gNB100) if it fails to decode the PDSCH transmitted at MCS Index #5 and requests MCS Index #2 as the desired MCS Index.

With such a configuration, the flexibility of the content of the feedback (delta-MCS selection) is equivalent and the bit size of the feedback (UCI) is smaller than that of the first example. That is, the signaling load can be suppressed compared with that of the first example.

(3.3) Example 3

In the example 3, a table defined for feedback may be introduced. The table defined for feedback may include the following options:

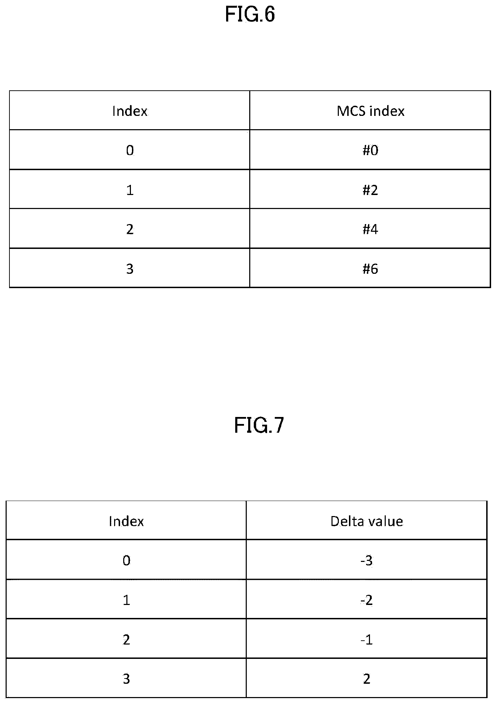

First, the content of the feedback is an information element indicating a desired MCS, which may be selected from the table defined for feedback. As shown in FIG. 6, the table defined for feedback may be a table that maps an MCS Index and an Index that may be requested in feedback. The MCS Index that may be specified using the table shown in FIG. 6 may be associated with the MCS Index table defined in 3GPP TS38.214. For example, the MCS Index that may be specified using the table shown in FIG. 6 may be part of the MCS Index that may be specified in the MCS Index table defined in 3GPP TS38.214.

The UE200 may select the desired MCS Index from the table shown in FIG. 6 and send feedback containing the Index associated with the selected MCS Index to the NG-RAN20 (gNB100). The bit size of the Index associated with the MCS Index is smaller than the bit size of the MCS Index.

According to such a configuration, the content of the feedback (delta-MCS selection) is less flexible than in the first example, but the bit size of the feedback (UCI) is smaller. That is, the signaling load can be suppressed compared to the first example.

Second, the content of the feedback is an index associated with the difference (Delta value) between the current MCS and the desired MCS, and the index associated with the Delta value may be selected from a table defined for the feedback. As shown in FIG. 7, the table defined for the feedback may be a table associated with the Delta value and the Index. The Delta value may be associated with the MCS Index table defined in 3GPP TS38.214. For example, in the table shown in FIG. 7, the Delta value may mean a difference in the MCS Index that can be specified in the MCS Index table defined in 3GPP TS38.214.

The UE200 may select the desired Delta value from the table shown in FIG. 7 and send feedback containing the Index associated with the selected Delta value to the NG-RAN20 (gNB100). The bit size of the Index associated with the Delta value is smaller than the bit size of the Delta value.

With such a configuration, the content of the feedback (delta-MCS selection) is less flexible than in the second example, but the bit size of the feedback (UCI) is smaller. That is, the signaling load can be suppressed compared to the second example.

(4) Feedback resources

In the following, feedback resources are described. The feedback resource may be an uplink control information (UCI) resource that is different from the feedback; possible options for the UCI resource are listed below.

(4.1) HARQ-ACK resource

The feedback may be transmitted using the HARQ-ACK resource, which is an example of a resource used in a retransmission control acknowledgement. possible options for the HARQ-ACK resource include the following

(4.1.1) HARQ-ACK CB (Code Book) Type

First, the feedback may be transmitted using a HARQ-ACK resource with a Type 1 HARQ-ACK CB, where the Type 1 HARQ-ACK CB may be a CB where the HARQ-ACK CB is allocated quasi-statically, e.g., by RRC configuration. Feedback may be added to the first or last X bits of the HARQ-ACK resource.
If feedback is added to the last X bits, the feedback bits may be represented as follows, with the assumption that the number of HARQ-ACK information bits is represented by $O^{ACK}$.

[Equation 1]

$$\text{Bits of feedback} \ldots \widetilde{O^{ACK}_{O^{ACK}-1+x}}$$

$$\text{Bits of HARQ ACK} \ldots j \ (0 \leq j \leq O^{ACK}\text{-}1)$$

If feedback is added to the first X bits, the feedback bits may be represented as follows, with the assumption that the number of HARQ-ACK information bits is represented by $O^{ACK}$.

[Number 2]

$$\text{Bits of feedback} \ldots \widetilde{O^{ACK}_{x}}$$

$$\text{Bits of HARQ ACK} \ldots \widetilde{O^{ACK}_{X-1+j}} \ (0 \leq j \leq O^{ACK}\text{-}1)$$

Second, the feedback may be transmitted using the HARQ-ACK resource of a Type 2 HARQ-ACK CB; a Type 2 HARQ-ACK CB may be a CB where the HARQ-ACK CB is dynamically allocated by the DCI or other means. Feedback may be added to the first or last X bits of the HARQ-ACK resource. The mapping of the feedback bits is the same as for the Type 2 HARQ-ACK CB case described above.
. Third, the feedback may be transmitted using HARQ-ACK resources for both Type 1 HARQ-ACK CB and Type 2 HARQ-ACK CB. In other words, the feedback may be transmitted using HARQ-ACK resources without regard to the HARQ-ACK CB Type. The feedback may be added to the first or last X bits of the HARQ-ACK resource. The mapping of the feedback bits is the same as in the case described above.
Which HARQ-ACK CB Type HARQ-ACK resource is used as the feedback resource may be determined by the RRC setting, by the UE Capability, or by both the RRC setting and the UE Capability. The HARQ-ACK CB may be used. Which HARQ-ACK CB Type HARQ-ACK resource is used may be determined by the MAC CE message or may be predetermined by the radio communication system 10.

(4.1.2) Priority of HARQ-ACK

First, the feedback may be transmitted using the HARQ-ACK resource of the High Priority (HP) HARQ-ACK.
Second, the feedback may be transmitted using LP (Low Priority) HARQ-ACK resources.
Third, feedback may be transmitted using HARQ-ACK resources for both HP HARQ-ACK and LP HARQ-ACK. In other words, the feedback may be transmitted using HARQ-ACK resources without regard to the priority of the HARQ-ACK.
Which priority HARQ-ACK resource is used as the feedback resource may be determined by the RRC setting, by the UE Capability, or by both the RRC setting and the UE Capability. Which priority HARQ-ACK resource is used may be determined by the MAC CE message or may be predetermined by the radio communication system 10.

Although two types of HARQ-ACK priorities, HP and LP, are illustrated here, there may be three or more types of HARQ-ACK priorities.

(4.1.3) HARQ-ACK resource allocation method

First, feedback may be transmitted using the HARQ-ACK resource of a dynamic HARQ-ACK. The dynamic HARQ-ACK may be a HARQ ACK for a Dynamic Grant (DG) PDSCH; the DG PDSCH may be a dynamically scheduled PDSCH.

Second, feedback may be transmitted using the HARQ-ACK resource of a quasi-static HARQ-ACK. The quasi-static HARQ-ACK may be a HARQ ACK for a PDSCH that is scheduled in Semi Persistent Scheduling (SPS).

Third, feedback may be transmitted using HARQ-ACK resources for both dynamic and quasi-static HARQ-ACK. In other words, feedback may be transmitted using HARQ-ACK resources without regard to the HARQ-ACK resource allocation method.

Which allocation method HARQ-ACK resource is used as the feedback resource may be determined by the RRC setting, by the UE Capability, or by both the RRC setting and the UE Capability. Which allocation method HARQ-ACK resource is used may be determined by the MAC CE message or may be predetermined by the radio communication system 10.

(4.2) CSI resources

Feedback may be transmitted using CSI resources; CSI resources are an example of resources used in a report of channel state information.

(4.3) Others

Which UCI resource is used as the feedback resource may be determined by the RRC settings, by the UE Capability, or by both the RRC settings and the UE Capability. Which UCI resource is used may be determined by the MAC CE message or may be predetermined by the radio communication system 10.

(5) Overview of example of operation

An overview of the example of operation of the embodiment will be described below.

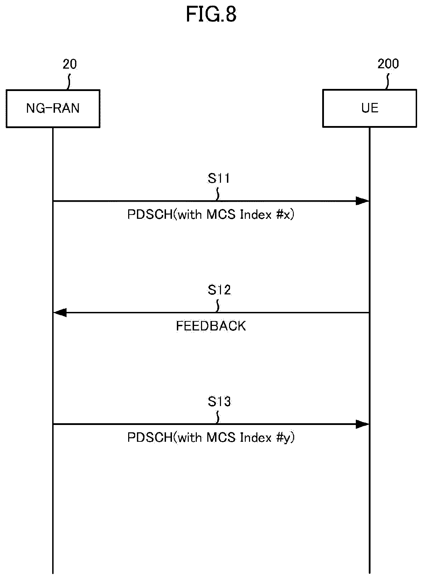

As shown in FIG. 8, in step S11, the NG-RAN20 (gNB100) transmits the PDSCH at the MCS associated with the MCS Index #x. Here, the UE200 fails to decode the PDSCH.

In step S12, the UE200 transmits the feedback used in selecting the MCS to the NG-RAN20 (gNB100). The contents of the feedback are as described in Examples 1 to 3.

In step S13, the NG-RAN20 (gNB100) transmits the PDSCH at the MCS associated with the MCS Index #y. The MCS Index #y is lower than the MCS Index #x. The MCS Index #y may be the MCS Index corresponding to the MCS requested in the feedback.

(5.1) Details of example of operation

In the following, details of an example of the operation of the embodiment are described. the UE 200 transmits feedback when specified conditions are met. the UE 200 transmits feedback so that the quality of the downlink channel (e.g., PDSCH) is the desired quality. The Desired Quality is defined based on the Block Error Rate ("BLER"). The desired quality may be referred to as Target BLER, which defines the BLER that subsequent PDSCHs should satisfy by transmitting feedback. In the following, the specific conditions and Target BLER are mainly explained.

(5.1.1) Operation example 1

In Option 1 of Operating Example 1, the availability of sending feedback may be set by a message received from NG-RAN 20 (gNB100). For example, the availability of sending feedback may be set (enabled or activated) by a message received from NG-RAN 20 (gNB100). Transmission of feedback may be deactivated (disabled or deactivated) by a message received from NG-RAN 20 (gNB 100). The message may be an RRC message, a MAC CE message, or a DCI.

In such cases, the specific condition for sending feedback may be a condition under which the transmission of feedback is set (enabled or activated). Alternatively, the specific condition for sending feedback may be a condition under which the transmission of feedback is not deactivated (disabled or deactivated).

In Option 2 of Operating Example 1, the availability of sending feedback may be determined by the capability information of the UE 200 (UE Capability) The UE Capability may include an information element indicating whether or not the UE 200 is capable of sending feedback.

In such a case, the specific condition for sending feedback may be the condition that the UE 200 has the UE Capability that corresponds to sending feedback.

. Option 3 in Operating Example 1 may be a combination of Option 1 (messages received from NG-RAN20 (gNB100)) and Option 2 (UE Capability).

. In such a case, the specific condition for sending feedback may be a condition where the UE 200 has the UE Capability corresponding to the transmission of feedback and the transmission of feedback is set (enabled or activated). Alternatively, the specific condition for sending feedback may be a condition where the UE 200 has the UE Capability corresponding to the transmission of feedback and the transmission of feedback has not been deactivated (disabled or deactivated).

(5.1.2) Operation Example 2

In Operating Example 2, the Target BLER may be set by the RRC setting.

. In the case where the Target BLER is set by the RRC setting, UE 200 determines the content of the feedback so that the quality of the subsequent PDSCH meets the Target BLER set by the RRC setting, and also sends the feedback to NG-RAN 20 (gNB100) by Transmission.

. In the case where Target BLER is not set by the RRC setting, UE 200 may not transmit feedback.

Alternatively, UE 200 may send feedback when Target BLER is informed by DCI even if Target BLER is not set by the RRC configuration. The UE 200 may send feedback if Target BLER is defined by the system 10.

For example, the Target BLER may be set for each UE 200. In such a case, PDSCH-Config may be used as the RRC message that sets the Target BLER. For example, the PDSCH-Config may include an information element indicating the Target BLER.

Alternatively, the Target BLER may be set on a per-cell basis. In such cases, PDSCH-ConfigCommon may be used as the RRC message that sets the Target BLER. For example, PDSCH-ConfigCommon may include an information element indicating the Target BLER.

In Operating Example 2, the specific condition for sending feedback may include a condition where the Target BLER is set by the RRC settings.

(5.1.3) Operation Example 3

In Operating Example 3, the Target BLER may be notified by the DCI.

In the case where the Target BLER is informed by the DCI, the UE 200 determines the content of the feedback and transmits the feedback to the NG-RAN 20 (gNB 100) so that the quality of the subsequent PDSCH meets the Target BLER informed by the DCI. The DCI may be a DCI scheduling the PDSCH or a DCI other than the DCI scheduling the PDSCH. However, the DCI that is transmitted before the subsequent PDCCH (e.g., the next PDCCH in a repeated transmission) is used as the DCI.

In the case where the Target BLER is not notified by the DCI, the UE 200 may not have to transmit feedback. Here, UE 200 may not initiate feedback when it is configured (enabled or activated) but is not informed of the Target BLER by the DCI.

Or, UE 200 may send feedback when Target BLER is set by RRC settings, even if Target BLER is not informed by DCI. The UE 200 may send feedback if the Target BLER is defined in the system 10, even if the Target BLER is not notified by the DCI.

For example, the DCI format may include at least one of DCI format 1_0/1_1/1/2; the DCI format may include at least one of DCI format 0_0/0_1/0_2 in addition to these.

The DCI may include an information element that implicitly signals the Target BLER by extension of an existing field (the MCS field). For example, by extending the MCS field to be able to store an additional x bit, the Target BLER may be implicitly informed by the x bit. x bit may be a bit that is represented by the same concept as in the first three examples described above. In such cases, the desired MCS may be read as the MCS corresponding to the Target BLER.

The DCI may include an information element that explicitly indicates the Target BLER. In such cases, the DCI may include a new field to store such information elements. The bits included in the new field may be bits that are expressed using the same concept as in the first three examples above. In such cases, the desired MCS may be read as the MCS corresponding to the Target BLER.

In Operating Example 3, the specific conditions under which feedback is transmitted may include conditions under which the Target BLER is informed by the DCI.

(5.1.4) Operation Example 4

In Operating Example 4, the Target BLER may be defined by the radio communication system 10.

In the case where Target BLER is defined in radio communication system 10, UE 200 determines the content of the feedback so that the quality of the subsequent PDSCH meets the Target BLER defined in radio communication system 10, and also sends the feedback to NG-RAN 20 (gNB 100).

UE 200 determines the content of the feedback so that the quality of the subsequent PDSCH meets the Target BLER set by the RRC setting, even if the Target BLER is defined in the radio communication system 10. The UE 200 may Alternatively, UE 200 may determine the content of the feedback so that the quality of the subsequent PDSCH satisfies the Target BLER notified by the DCI, even if the Target BLER is defined in the radio communication system 10, when the Target BLER is notified by the DCI. It may also be possible to.

(6) Operation and effect

In the embodiment, the UE200 transmits feedback to be used in selecting the MCS to be used in the downlink channel (For example, PDSCH). The content of the feedback includes at least one of an information element indicating a desired MCS, an information element indicating a difference between the current MCS and the desired MCS, and an information element indicating an index associated with the difference between the current MCS and the desired MCS. With such a configuration, the content of the feedback is defined in consideration of the flexibility of the content of the feedback and the signaling load, so that the feedback used in selecting the MCS can be appropriately transmitted.

In the embodiment, the UE 200 sends feedback when the specified conditions are satisfied. According to this configuration, feedback can be appropriately transmitted by defining the specific conditions under which feedback is transmitted.

In the embodiment, the UE 200 transmits the feedback using a different UCI resource than the feedback. According to this configuration, the feedback can be properly transmitted by defining the resource to transmit the feedback.

(7) Other Embodiments

Although the contents of the present invention have been described in accordance with the above embodiments, it is obvious to those skilled in the art that the present invention is not limited to these descriptions but can be modified and improved in various ways.

In the foregoing disclosure, the content of the feedback includes an information element (Delta-MCS) that explicitly indicates the desired MCS. However, the foregoing disclosure is not limited thereto. The content of the feedback may include information elements that implicitly indicate the desired MCS. Such information elements may be Channel Quality Indicators (CQIs) that can be associated with the MCS. A CQI that can be specified in the CQI table defined in 3GPP TS38.214 may be used as the CQI. That is, the feedback content may include an information element (Delta-CQI) that explicitly indicates the desired CQI. In such a case, MCS may be read as CQI and MCS Index may be read as CQI Index.

In the foregoing disclosure, the content of the feedback includes an information element (Delta-MCS) that explicitly indicates the difference between the current MCS and the desired MCS. However, the foregoing disclosure is not limited thereto. The content of the feedback may include information elements that implicitly indicate a difference between the current MCS and the desired MCS. Such information elements may be CQIs that can be associated with the MCS. As CQIs, CQIs that can be specified in the CQI table defined in 3GPP TS38.214 may be used. That is, the feedback content may include an information element (Delta-CQI) that explicitly indicates the difference between the current CQI and the desired CQI. In such a case, MCS may be read as CQI and MCS Index may be read as CQI Index.

In the foregoing disclosure, the content of the feedback includes an information element (Delta-MCS) that is explicitly associated with the difference between the current MCS and the desired MCS. However, the foregoing disclosure is not limited thereto. The content of the feedback may include information elements that are implicitly associated with differences between the current MCS and the desired MCS. Such information elements may be CQIs that can be associated with the MCS. As CQIs, CQIs that can be specified in the CQI table defined in 3GPP TS38.214 may be used. That is, the feedback content may include an information element (Delta-CQI) that is explicitly associated with the difference between the current CQI and the desired CQI. In such a case, the MCS may be read as the CQI, and the MCS Index may be read as the CQI Index.

In the foregoing disclosure, a table defined for feedback is a table for MCS. However, the foregoing disclosure is not limited thereto. The table defined for feedback may be a table for CQI. For example, the content of the feedback may include an Index associated with the desired CQI Index or an Index associated with the difference between the current CQI and the desired CQI. In such a case, the MCS may be read as the CQI and the MCS Index may be read as the CQI Index.

Although not specifically mentioned in the above disclosure, whether feedback on MCS (Delta-MCS) or CQI (Delta-CQI) is used as the content of feedback may be set by upper-layer parameters, reported by UE Capability of UE 200, or predetermined by the radio communication system 10. Furthermore, which of the above options is applied may be determined by upper-layer parameters and UE Capability.

Although not specifically mentioned in the above disclosure, which of the above options is applied may be set by upper-layer parameters, reported by UE Capability 200, and predetermined by the radio communication system 10. In addition, the application of any of the above options may be determined by upper layer parameters and UE Capability.

Here, UE Capability may include the following information elements:

First, UE Capability may include an information element that defines whether feedback on MCS (Delta-MCS) is being addressed. UE Capability may include an information element that defines whether feedback on CQI (Delta-CQI) is being addressed.

Second, UE Capability may include an information element that defines whether it is addressing Example 1. UE Capability may include an information element that defines whether it is addressing Example 2. UE Capability may include an information element that defines whether it is addressing Example 3.

Although not specifically mentioned in the above disclosure, the target BLER may be $10^{-6}$ or $10^{-5}$. In other words, values other than $10^{-6}$ and $10^{-5}$ may not be used as target BLER.

FIG. 4 and FIG. 5 show blocks of functional units. Those functional blocks (structural components) can be realized by a desired combination of at least one of hardware and software. Means for realizing each functional block is not particularly limited. That is, each functional block may be implemented using a single device that is physically or logically coupled, or two or more devices that are physically or logically separated may be directly or indirectly (For example, using wire, wireless, etc.) connected and implemented using these multiple devices. The functional block may be implemented using the single device or the multiple devices combined with software.

Functions include judging, deciding, determining, calculating, computing, processing, deriving, investigating, searching, confirming, receiving, transmitting, outputting, accessing, resolving, selecting, choosing, establishing, comparing, assuming, expecting, considering, broadcasting, notifying, communicating, forwarding, configuring, reconfiguring, allocating (mapping), assigning, and the like. However, the functions are not limited thereto. For example, the functional block (component) that functions transmission is called a transmission unit (transmitting unit) or a transmitter. As described above, the method of realization of both is not particularly limited.

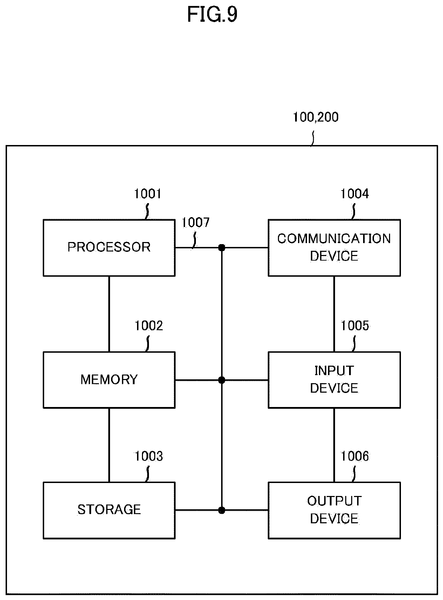

In addition, the above-mentioned gNB100 and UE200 (the device) may function as a computer for processing the radio communication method of the present disclosure. FIG. 9 is a diagram showing an example of the hardware configuration of the device. As shown in FIG. 9, the device may be configured as a computer device including a processor 1001, a memory 1002, a storage 1003, a communication device 1004, an input device 1005, an output device 1006 and a bus 1007.

Furthermore, in the following explanation, the term "device" can be replaced with a circuit, device, unit, and the like. The hardware configuration of the device may be configured to include one or more of the devices shown or may be configured without some of the devices.

Each functional block of the device (see FIG. 4) is implemented by any hardware element of the computer device or a combination of the hardware elements.

Moreover, the processor 1001 performs computing by loading a predetermined software (computer program) on hardware such as the processor 1001 and the memory 1002, and realizes various functions of the reference device by controlling communication via the communication device 1004, and controlling reading and/or writing of data on the memory 1002 and the storage 1003.

Processor 1001, for example, operates an operating system to control the entire computer. Processor 1001 may be configured with a central processing unit (CPU), including interfaces to peripheral devices, controls, computing devices, registers, etc.

Moreover, the processor 1001 reads a computer program (program code), a software module, data, and the like from the storage 1003 and/or the communication device 1004 into the memory 1002, and executes various processes according to the data. As the computer program, a computer program that is capable of executing on the computer at least a part of the operation explained in the above embodiments is used. In addition, the various processes described above may be performed by one processor 1001 or may be performed simultaneously or sequentially by two or more processors 1001. The processor 1001 can be implemented by using one or more chips. Alternatively, the computer program can be transmitted from a network via a telecommunication line.

The memory 1002 is a computer readable recording medium and is configured, for example, with at least one of Read Only Memory (ROM), Erasable Programmable ROM (EPROM), Electrically Erasable Programmable ROM (EEPROM), Random Access Memory (RAM), and the like. The memory 1002 may be referred to as a register, cache, main memory (main storage device), or the like. The memory 1002 may store a program (program code), a software module, or the like capable of executing a method according to an embodiment of the present disclosure.

The storage 1003 is a computer readable recording medium. Examples of the storage 1003 include an optical disk such as Compact Disc ROM (CD-ROM), a hard disk drive, a flexible disk, a magneto-optical disk (for example, a compact disk, a digital versatile disk, Blu-ray (Registered Trademark) disk), a smart card, a flash memory (for example, a card, a stick, a key drive), a floppy (Registered Trademark) disk, a magnetic strip, and the like. The storage 1003 can be called an auxiliary storage device. The recording medium can be, for example, a database including the memory 1002 and/or the storage 1003, a server, or other appropriate medium.

The communication device 1004 is hardware (transmission/reception device) capable of performing communication between computers via a wired and/or wireless network. The communication device 1004 is also called, for example, a network device, a network controller, a network card, a communication module, and the like.

The communication device 1004 includes a high-frequency switch, a duplexer, a filter, a frequency synthesizer, and the like in order to realize, for example, at least one of Frequency Division Duplex (FDD) and Time Division Duplex (TDD).

The input device 1005 is an input device (for example, a keyboard, a mouse, a microphone, a switch, a button, a sensor, and the like) that accepts input from the outside. The output device 1006 is an output device (for example, a display, a speaker, an LED lamp, and the like) that outputs data to the outside. Note that, the input device 1005 and the output device 1006 may be integrated (for example, a touch screen).

Each device, such as the processor 1001 and the memory 1002, is connected by a bus 1007 for communicating information. The bus 1007 may be configured using a single bus or a different bus for each device.

In addition, the device may include hardware such as a microprocessor, a digital signal processor (DSP), an application specific integrated circuit (ASIC), a programmable logic device (PLD), a field programmable gate array (FPGA), or the like, which may provide some or all of each functional block. For example, the processor 1001 may be implemented by using at least one of these hardware.

Information notification is not limited to the aspects/embodiments described in the present disclosure and may be performed using other methods. For example, information notification may be performed by physical layer signaling (e.g., Downlink Control Information (DCI), Uplink Control Information (UCI), higher layer signaling (e.g., RRC signaling, Medium Access Control (MAC) signaling, Notification Information (Master Information Block (MIB), System Information Block (SIB)), other signals, or combinations thereof. RRC signaling may also be referred to as RRC messages, e.g., RRC Connection Setup messages, RRC Connection Reconfiguration messages, etc.

Each of the above aspects/embodiments can be applied to at least one of Long Term Evolution (LTE), LTE-Advanced (LTE-A), SUPER 3G, IMT-Advanced, 4th generation mobile communication system (4G), 5th generation mobile communication system (5G), Future Radio Access (FRA), New Radio (NR), W-CDMA (Registered Trademark), GSM (Registered Trademark), CDMA2000, Ultra Mobile Broadband (UMB), IEEE 802.11 (Wi-Fi (Registered Trademark)), IEEE 802.16 (WiMAX (Registered Trademark)), IEEE 802.20, Ultra-WideBand (UWB), Bluetooth (Registered Trademark), a system using any other appropriate system, and a next-generation system that is expanded based on these. Further, a plurality of systems may be combined (for example, a combination of at least one of the LTE and the LTE-A with the 5G).

The processing procedures, sequences, flowcharts, etc. of the embodiments/embodiments described in the present disclosure may be rearranged as long as there is no conflict. For example, the method described in the present disclosure presents the elements of the various steps using an exemplary sequence and is not limited to the particular sequence presented.

The specific operation that is performed by the base station in the present disclosure may be performed by its upper node in some cases. It is apparent that in a network consisting of one or more network nodes having a base station, the various operations performed for communication with the terminal may be performed by at least one of the base station and other network nodes (Examples include, but are not limited to, MME or S-GW.) other than the base station. In the above, an example in which there is one network node other than the base station is explained; however, a combination of a plurality of other network nodes (for example, MME and S-GW) may be used.

Information, signals (information, etc.) may be output from a higher layer (or lower layer) to a lower layer (or higher layer). It may be input and output via a plurality of network nodes.

The input/output information can be stored in a specific location (for example, a memory) or can be managed in a management table. The input and output information may be overwritten, updated, or added. The information can be deleted after outputting. The inputted information can be transmitted to another device.

The determination may be based on a value represented by a single bit (0 or 1), a true or false value (Boolean: true or false), or a numerical comparison (For example, comparison with a given value).

Each of the aspects/embodiments described in the present disclosure may be used alone, in combination, or alternatively in execution. In addition, notification of predetermined information (for example, notification of "being X") is not limited to being performed explicitly, it may be performed implicitly (for example, without notifying the predetermined information).

Instead of being referred to as software, firmware, middleware, microcode, hardware description language, or some other name, software should be interpreted broadly to mean instruction, instruction set, code, code segment, program code, program, subprogram, software module, application, software application, software package, routine, subroutine, object, executable file, execution thread, procedure, function, and the like.

Further, software, instruction, information, and the like may be transmitted and received via a transmission medium. For example, if software is transmitted from a website, server, or other remote source using at least one of wired technology (Coaxial, fiber-optic, twisted-pair, and digital subscriber lines (DSL)) and wireless technology (Infrared, microwave, etc.), at least one of these wired and wireless technologies is included within the definition of a transmission medium.

Information, signals, or the like mentioned above may be represented by using any of a variety of different technologies. For example, data, instructions, commands, information, signals, bits, symbols, chips, etc. that may be referred to throughout the above description may be represented by voltage, current, electromagnetic waves, magnetic fields or magnetic particles, optical fields or photons, or any combination thereof.

The terms described in the present disclosure and those necessary for understanding the present disclosure may be replaced with terms having the same or similar meanings. For example, at least one of a channel and a symbol may be a signal (signaling). The signal may also be a message. Also, a signal may be a message. Further, a component carrier (Component Carrier: CC) may be referred to as a carrier frequency, a cell, a frequency carrier, or the like.

The terms "system" and "network" used in the present disclosure can be used interchangeably.

Furthermore, the information, the parameter, and the like explained in the present disclosure can be represented by an absolute value, can be expressed as a relative value from a predetermined value, or can be represented by corresponding other information. For example, the radio resource can be indicated by an index.

The name used for the above parameter is not a restrictive name in any respect. In addition, formulas and the like using these parameters may be different from those explicitly disclosed in the present disclosure. Because the various channels (for example, PUCCH, PDCCH, or the like) and information element can be identified by any suitable name, the various names assigned to these various channels and information elements shall not be restricted in any way.

In the present disclosure, it is assumed that "base station (Base Station: BS)," "radio base station," "fixed station," "NodeB," "eNodeB (eNB)," "gNodeB (gNB)," "access point," "transmission point," "reception point," "transmission/reception point," "cell," "sector," "cell group," "carrier," "component carrier," and the like can be used interchangeably. The base station may also be referred to with the terms such as a macro cell, a small cell, a femtocell, or a pico cell.

The base station may contain one or more (For example, three) cells, also called sectors. In a configuration in which the base station accommodates a plurality of cells, the entire coverage area of the base station can be divided into a plurality of smaller areas. In each such a smaller area, communication service can be provided by a base station subsystem (for example, a small base station for indoor use (Remote Radio Head: RRH)).

The term "cell" or "sector" refers to a base station performing communication services in this coverage and to a portion or the entire coverage area of at least one of the base station subsystems.

In the present disclosure, the terms "mobile station (Mobile Station: MS)," "user terminal," "user equipment (User Equipment: UE)," "terminal" and the like can be used interchangeably.

A mobile station may also be referred to by one of ordinary skill in the art as a subscriber station, mobile unit, subscriber unit, wireless unit, remote unit, mobile device, wireless device, radio communication device, remote device, mobile subscriber station, access terminal, mobile terminal, wireless terminal, remote terminal, handset, user agent, mobile client, client, or some other appropriate term.

At least one of a base station and a mobile station may be called a transmitting device, a receiving device, a communication device, or the e like. Note that, at least one of a base station and a mobile station may be a device mounted on a moving body, a moving body itself, or the like. The mobile may be a vehicle (For example, cars, planes, etc.), an unmanned mobile (For example, drones, self-driving cars,), or a robot (manned or unmanned). At least one of a base station and a mobile station can be a device that does not necessarily move during the communication operation. For example, at least one of a base station and a mobile station may be an Internet of Things (IoT) device such as a sensor.

The base station in the present disclosure may be read as a mobile station (user terminal, hereinafter the same). For example, each aspect/embodiment of the present disclosure may be applied to a configuration in which communication between a base station and a mobile station is replaced by communication between a plurality of mobile stations (For example, it may be called device-to-device (D2D), vehicle-to-everything (V2X), etc.). In this case, the mobile station may have the function of the base station. Further, words such as "up" and "down" may be replaced with words corresponding to communication between terminals (For example, "side"). For example, terms an uplink channel, a downlink channel, or the like may be read as a side channel.

Similarly, the mobile station in the present disclosure may be replaced with a base station. In this case, the base station may have the function of the mobile stat ion.

The radio frame may be composed of one or more frames in the time domain. Each frame or frames in the time domain may be called a subframe.

The subframes may also be composed of one or more slots in the time domain. The subframes may be of a fixed time length (For example, 1 ms) independent of numerology.

The numerology may be a communication parameter applied to at least one of the transmission and reception of a signal or channel. The numerology can include one among, for example, subcarrier spacing (SubCarrier Spacing: SCS), bandwidth, symbol length, cyclic prefix length, transmission time interval (Transmission Time Interval: TTI), number of symbols per TTI, radio frame configuration, a specific filtering process performed by a transceiver in the frequency domain, a specific windowing process performed by a transceiver in the time domain, and the like.

The slot may consist of one or more symbols (Orthogonal Frequency Division Multiplexing (OFDM)) symbols, Single Carrier Frequency Division Multiple Access (SC-FDMA) symbols, etc., in tin the time domain. A slot may be a unit of time based on the numerology.

A slot may include a plurality of minislots. Each minislot may be composed of one or more symbols in the time domain. A minislot may also be called a subslot. A minislot may be composed of fewer symbols than slots. PDSCH (or PUSCH) transmitted in units of time greater than the minislot may be referred to as PDSCH (or PUSCH) mapping type A. PDSCH (or PUSCH) transmitted using the minislot may be referred to as PDSCH (or PUSCH) mapping type B.

Each of the radio frame, subframe, slot, minislot, and symbol represents a time unit for transmitting a signal. Different names may be used for the radio frame, subframe, slot, minislot, and symbol.

For example, one subframe may be referred to as the transmission time interval (TTI), multiple consecutive subframes may be referred to as TTI, and one slot or minislot may be referred to as TTI. That is, at least one of the subframe and the TTI may be a subframe (1 ms) in the existing LTE, a period shorter than 1 ms (For example, 1-13 symbols), or a period longer than 1 ms. Note that, a unit representing TTI may be called a slot, a minislot, or the like instead of a subframe.

Here, TTI refers to the minimum time unit of scheduling in radio communication, for example. Here, TTI refers to the minimum time unit of scheduling in radio communication, for example. For example, in the LTE system, the base station performs scheduling for allocating radio resources (frequency bandwidth, transmission power, etc. that can be used in each user terminal) to each user terminal in units of TTI. The definition of TTI is not limited to this.

The TTI may be a transmission time unit such as a channel-encoded data packet (transport block), a code block, or a code word, or may be a processing unit such as scheduling or link adaptation. When TTI is given, a time interval (for example, the number of symbols) in which a transport block, a code block, a code word, etc. are actually mapped may be shorter than TTI.

When one slot or one minislot is called a TTI, one or more TTIs (That is, one or more slots or one or more minislots) may be the minimum time unit for scheduling. The number of slots (number of minislots) constituting the minimum time unit for scheduling may be controlled.

TTI having a time length of 1 ms may be referred to as an ordinary TTI (TTI in LTE Rel. 8-12), a normal TTI, a long TTI, a normal subframe, a normal subframe, a long subframe, a slot, and the like. TTIs shorter than the normal TTI may be referred to as shortened TTI, short TTI, partial or fractional TTI, shortened subframe, short subframe, minislot, subslot, slot, etc.

In addition, a long TTI (for example, ordinary TTI, subframe, etc.) may be read as TTI having a time length exceeding 1 ms, and a short TTI (for example, shortened TTI) may be read as TTI having TTI length of less than the TTI length of the long TTI but TTI length of 1 ms or more.

A resource block (RB) is a resource allocation unit in the time and frequency domains and may include one or more consecutive subcarriers in the frequency domain. The number of subcarriers included in RB may be, for example, twelve, and the same regardless of the topology. The number of subcarriers included in the RB may be determined based on the neurology.

The time domain of the RB may also include one or more symbols and may be one slot, one minislot, one subframe, or one TTI in length. The one TTI, one subframe, and the like may each consist of one or more resource blocks.

The one or more RBs may be called physical resource blocks (PRBs), sub-carrier groups (SCGs), resource element groups (REGs), PRB pairs, RB pairs, and the like.

The resource blocks may be composed of one or more resource elements (REs). For example, one RE may be a radio resource area of one subcarrier and one symbol.

A bandwidth part (BWP) (which may be called a partial bandwidth, etc.) may represent a subset of contiguous common resource blocks (RBs) for a certain neurology in a certain carrier. Here, the common RB may be specified by an index of the RB relative to the common reference point of the carrier. PRB may be defined in BWP and numbered within that BWP.

BWP may include UL BWP (UL BWP) and DL BWP (DL BWP). For the UE, one or more BWPs may be set in one carrier.

At least one of the configured BWPs may be active, and the UE may not expect to send and receive certain signals/channels outside the active BWP. Note that "cell," "carrier," and the like in this disclosure may be read as "BWP."

The above-described structures such as a radio frame, subframe, slot, minislot, and symbol are merely examples. For example, the number of subframes included in the radio frame, the number of slots per subframe or radio frame, the number of minislots included in the slot, the number of symbols and RBs included in the slot or minislot, the number of subcarriers included in the RB, and the number of symbols in the TTI, the symbol length, the cyclic prefix (CP) length, and the like can be varied.

The terms "connected" and "coupled," or any variation thereof, mean any direct or indirect connection or coupling between two or more elements, and can include the presence of one or more intermediate elements between two elements "connected" or "coupled" to each other. The connection or coupling between elements may be physical, logical, or a combination thereof. For example, "connection" may be read as "access." As used in the present disclosure, two elements may be considered to be "connected" or "coupled" to each other using at least one of one or more wire, cable, and printed electrical connections and, as some non-limiting and non-inclusive examples, electromagnetic energy having wavelengths in the radio frequency, microwave, and optical (both visible and invisible) domains.

The reference signal may be abbreviated as Reference Signal (RS) and may be called pilot (Pilot) according to applicable standards.

As used in the present disclosure, the phrase "based on" does not mean "based only on" unless explicitly stated otherwise. In other words, the phrase "based on" means both "based only on" and "based at least on."

The "means" in the configuration of each apparatus may be replaced with "unit," "circuit," "device," and the like.

Any reference to elements using designations such as "first" and "second" as used in this disclosure does not generally limit the quantity or order of those elements. Such designations can be used in the present disclosure as a convenient way to distinguish between two or more elements. Accordingly, references to first and second elements do not mean that only two elements may be employed therein, or that the first element must in any way precede the second element.

In the present disclosure, the used terms "include," "including," and variants thereof are intended to be inclusive in a manner similar to the term "comprising." Furthermore, it is intended that the term "or" as used in the present disclosure is not an exclusive OR.

Throughout this disclosure, for example, during translation, if articles such as a, an, and the in English are added, in this disclosure, these articles shall include plurality of nouns following these articles.

As used in this disclosure, the terms "determining," "judging" and "deciding" may encompass a wide variety of actions. "Judgment" and "decision" includes judging or deciding by, for example, judging, calculating, computing, processing, deriving, investigating, looking up, search, inquiry (e.g., searching in a table, database, or other data structure), ascertaining, and the like. In addition, "judgment" and "decision" can include judging or deciding by receiving (for example, receiving information), transmitting (for example, transmitting information), input (input), output (output), and access (accessing) (e.g., accessing data in a memory). In addition, "judgement" and "decision" can include judging or deciding by resolving, selecting, choosing, establishing, and comparing. That is, "judgment" and "decision" may include deeming any action "judgment" and "decision." Moreover, "judgment (decision)" may be read as "assuming," "expecting," "considering," and the like.

In the present disclosure, the term "A and B are different" may mean "A and B are different from each other." It should be noted that the term may mean "A and B are each different from C." Terms such as "leave," "coupled," or the like may also be interpreted in the same manner as "different."

Although the present disclosure has been described in detail above, it will be obvious to those skilled in the art that the present disclosure is not limited to the embodiments described in this disclosure. The present disclosure can be implemented as modifications and variations without departing from the spirit and scope of the present disclosure as defined by the claims. Therefore, the description of the present disclosure is for the purpose of illustration, and does not have any restrictive meaning to the present disclosure.

[Explanation of Reference Numerals]

10 Radio communication system
20 NG-RAN
100 gNB
110 Reception unit
120 Transmission unit
130 Control unit
200 UE
210 Radio signal transmission and reception unit
220 Amplifier unit
230 Modulation and demodulation unit
240 Control signal and reference signal processing unit
250 Encoding/decoding unit

260 Data transmission and reception unit
270 Control unit
1001 Processor
1002 Memory
1003 Storage
1004 Communication device
1005 Input device
1006 Output device
1007 Bus

**Claims**

1. A terminal comprising:

   a transmission unit that transmits a feedback to be used in selecting a modulation method used on a downlink channel; and
   a control unit that determines a content of the feedback; wherein
   the transmission unit transmits the feedback using a resource of uplink control information different from the feedback.

2. The terminal of claim 1, wherein
   the resource of the uplink control information includes at least one of a resource used in a retransmission control acknowledgement and a resource of used in a report of channel state information.

3. The terminal of claim 1, wherein
   the resource of the uplink control information is determined at least one of a radio resource control configuration and a capability of the terminal.

4. A radio communication system comprising:

   a terminal; and
   a base station; wherein
   the terminal comprises:

      a transmission unit that transmits a feedback to be used in selecting a modulation method used on a downlink channel; and
      a control unit that determines a content of the feedback; wherein

   the transmission unit transmits the feedback using a resource of uplink control information different from the feedback.

5. A radio communication method comprising:

   a step A of transmitting a feedback to be used in selecting a modulation method used on a downlink channel; and
   a step B of determining a content of the feedback; wherein
   the step A includes a step of transmitting the feedback using a resource of uplink control information different from the feedback.

FIG.1

EP 4 354 946 A1

# FIG.2

FR1
{15,30,60} kHz SCS
5~100 MHz BW

FR2
{60,120,(240)} kHz SCS
50~400 MHz BW

FR2x

0.41 GHz    1 GHz    7.125 GHz    10 GHz    24.25 GHz    52.6 GHz    71 GHz    100 GHz    f

# FIG.3

Radio Frame (10ms)

| #0 | #1 | #2 | #3 | #4 | #5 | #6 | #7 | #8 | #9 |

Sub frame (1ms)

t

Sub-Carrier Spacing

Slot (14-symbol)

15kHz

| #0 | #1 | #2 | #3 | #4 | #5 | #6 | #7 | #8 | #9 | #10 | #11 | #12 | #13 |

Slot (14-symbol)

30kHz

Slot (14-symbol)

60kHz

Slot (14-symbol)

120kHz

Slot (14-symbol)

240kHz

FIG.4

FIG.5

# FIG.6

| Index | MCS index |
|-------|-----------|
| 0 | #0 |
| 1 | #2 |
| 2 | #4 |
| 3 | #6 |

# FIG.7

| Index | Delta value |
|-------|-------------|
| 0 | -3 |
| 1 | -2 |
| 2 | -1 |
| 3 | 2 |

## FIG.8

# FIG.9

100,200

| 1001 | 1007 | 1004 |
|------|------|------|
| PROCESSOR | | COMMUNICATION DEVICE |

| 1002 | | 1005 |
|------|------|------|
| MEMORY | | INPUT DEVICE |

| 1003 | | 1006 |
|------|------|------|
| STORAGE | | OUTPUT DEVICE |

## INTERNATIONAL SEARCH REPORT

International application No.

**PCT/JP2022/015839**

### A. CLASSIFICATION OF SUBJECT MATTER

***H04W 24/10***(2009.01)i; ***H04W 72/02***(2009.01)i; ***H04W 72/04***(2009.01)i; ***H04W 28/18***(2009.01)i
FI: H04W24/10; H04W28/18 110; H04W72/02; H04W72/04 136

According to International Patent Classification (IPC) or to both national classification and IPC

### B. FIELDS SEARCHED

Minimum documentation searched (classification system followed by classification symbols)

H04W24/10; H04W72/02; H04W72/04; H04W28/18

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | ERICSSON. CSI Feedback Enhancements for IIoT/URLLC [online]. 3GPP TSG RAN WG1 #105-e R1-2104218. 12 May 2021 section 2.2 | 1-5 |

☐ Further documents are listed in the continuation of Box C.   ☐ See patent family annex.

| | | |
|---|---|---|
| * | Special categories of cited documents: | "T" later document published after the international filing date or priority date and not in conflict with the application but cited to understand the principle or theory underlying the invention |
| "A" | document defining the general state of the art which is not considered to be of particular relevance | "X" document of particular relevance; the claimed invention cannot be considered novel or cannot be considered to involve an inventive step when the document is taken alone |
| "E" | earlier application or patent but published on or after the international filing date | |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
|---|---|
| **21 April 2022** | **10 May 2022** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Enhanced Industrial Internet of Things (IoT) and ultra-reliable and low latency communication. *RP-201310, 3GPP TSG RAN Meeting #86e, 3GPP,* July 2020